# EUROPÄISCHE PATENTSCHRIFT

(11) **EP 2 925 486 B1**
(45) Veröffentlichungstag und Bekanntmachung des Hinweises auf die Patenterteilung: **24.10.2018**
(21) Anmeldenummer: 13799246.7
(22) Anmeldetag: 25.11.2013
(51) Int. Cl.: B23P 6/00, F01D 5/00, G05B 19/4097

(54) **VERFAHREN UND VORRICHTUNG ZUR REPARATUR EINES FLUGZEUG- UND/ODER GASTURBINEN-BAUTEILS**
METHOD AND DEVICE FOR REPAIRING AN AIRCRAFT AND/OR GAS TURBINE COMPONENT
PROCÉDÉ ET DISPOSITIF DE RÉPARATION D'UN ÉLÉMENT STRUCTURAL D'AÉRONEF ET/OU DE TURBINE À GAZ

(30) Priorität: 28.11.2012 DE 102012221782
(43) Veröffentlichungstag der Anmeldung: 07.10.2015
(73) Patentinhaber: Lufthansa Technik AG, 22335 Hamburg (DE)
(72) Erfinder: ERNST, Michael, 25421 Pinneberg (DE); ULLRICH, Thiemo, 25436 Heidgraben (DE)
(74) Vertreter: Müller Verweyen
(86) Internationale Anmeldenummer: PCT/EP2013/074553
(87) Internationale Veröffentlichungsnummer: WO 2014/082947

(56) Entgegenhaltungen:
- EP-A1- 0 350 000
- EP-A1- 2 206 575
- EP-A1- 2 286 956
- EP-A1- 2 484 481
- EP-A2- 1 422 380
- WO-A2-2009/105221
- DE-A1-102006 012 675
- DE-A1-102011 103 003
- DE-U1- 8 909 840
- FR-A1- 2 897 550
- US-A1- 2003 167 616
- GAO J ET AL: "INVESTIGATION OF A 3D NON-CONTACT MEASUREMENT BASED BLADE REPAIR INTEGRATION SYSTEM", AIRCRAFT ENGINEERING, BUNHILL PUBLICATIONS LTD. LONDON, GB, Bd. 77, Nr. 1, 1. Januar 2005 (2005-01-01) , Seiten 34-41, XP001222981, DOI: 10.1108/00022660510576028
- JIAN GAO ET AL: "An integrated adaptive repair solution for complex aerospace components through geometry reconstruction", THE INTERNATIONAL JOURNAL OF ADVANCED MANUFACTURING TECHNOLOGY, SPRINGER, BERLIN, DE, Bd. 36, Nr. 11-12, 3. Februar 2007 (2007-02-03), Seiten 1170-1179, XP019583787, ISSN: 1433-3015
- JIANMING ZHENG ET AL: "Worn area modeling for automating the repair of turbine blades", THE INTERNATIONAL JOURNAL OF ADVANCED MANUFACTURING TECHNOLOGY, SPRINGER, BERLIN, DE, Bd. 29, Nr. 9-10, 7. Juni 2006 (2006-06-07), Seiten 1062-1067, XP019418863, ISSN: 1433-3015, DOI: 10.1007/S00170-003-1990-6

## Beschreibung

Die Erfindung betrifft ein Verfahren und eine entsprechende Vorrichtung zur Reparatur eines Flugzeug- und/oder Gasturbinen-Bauteils.

Flugzeugbauteile sind im Betrieb einer hohen Beanspruchung ausgesetzt. Neben Bauteilen aus Verbundwerkstoffen, wie beispielsweise Strukturbauteilen, oder metallischen Bauteilen, wie beispielsweise Fahrwerksbauteile, kann dies insbesondere bei den Bauteilen eines Flugzeugtriebwerks zu einer schadhaften Rissbildung führen. Ähnliche Schadensbilder sind auch bei anderen Gasturbinen, beispielsweise bei stationären Gasturbinen vorhanden. Brennkammerbauteile sind bei Gasturbinen besonders stark von der Rissbildung betroffen.

Risse sind lokale Materialtrennungen innerhalb einer Struktur oder innerhalb eines Bauteils. Die Rissentstehung ist in der Regel ein lokales Ereignis in der Mikrostruktur der Oberfläche, das in der Regel durch Gitterfehler im Mikrogefüge oder durch zyklische Betriebsbelastungen verursacht wird. Risse breiten sich im Regelfall senkrecht zur wirkenden Normalspannung aus. Diese Ausbreitung wird als normalspannungsgesteuert bezeichnet.

Im Falle von Brennkammerbauteilen entstehen Risse durch hohe thermische und mechanische Belastung. Die Rissbildung wird zum einen durch die vorherrschenden hohen Temperaturen verursacht und zum anderen fördern die auf die Brennkammer übertragenen Schwingungen aus den vor- und nachgeschalteten Modulen, dem Hochdruckverdichter und der Hochdruckturbine das Risswachstum und die Rissbildung.

Zudem begünstigen kurzzeitige thermische Materialspannungen während des Startens der Gasturbine bzw. während der Startphase des Flugzeugs die Rissentstehung. In die Gasturbine eingesaugte feste Partikel, wie beispielsweise Sand und Staub, tragen ebenfalls stark zur Rissentstehung an Brennkammerkomponenten bei. Des Weiteren führen die dauerhaften thermischen Belastungen während der Betriebsphase der Gasturbine dazu, dass die geometrische Form der Brennkammerkomponenten eine Veränderung erfahren kann.

In der Instandhaltung von Flugzeug- und/oder Gasturbinen-Bauteilen, insbesondere in der Brennkammerinstandhaltung, besteht das Hauptproblem darin, die im Betrieb entstandenen Risse und Geometrieveränderungen zu detektieren und die Bauteile durch geeignete Maßnahmen zu reparieren. Aufgrund der individuell unterschiedlichen Riss- bzw. Beschädigungsausprägung gestaltet sich dies oft schwierig.

Die etablierten Reparaturverfahren umfassen eine annähernd vollständig manuell durchgeführte Prozesskette, die durch eine lange und instabile Durchlaufzeit sowie eine geringe Reproduzierbarkeit der Reparaturergebnisse gekennzeichnet ist. Sowohl Prozessstabilität als auch -qualität sind stark vom Know-how und der langjährigen Erfahrung der Bearbeiter abhängig.

Die Qualität der bekannten Reparaturverfahren wird dementsprechend durch den menschlichen Faktor stark beeinflusst. Es handelt sich zudem insgesamt um sehr aufwendige Verfahren, insbesondere da sichergestellt und dokumentiert werden muss, dass den hohen luftfahrtrechtlichen Anforderungen entsprochen wird.

Problematisch sind beispielsweise die beim Richten der Bauteile auftretenden Ungenauigkeiten, die komplizierten und aufwendigen "Flicken" (engl. Patch) Reparaturen, bei denen ein beschädigter Bereich komplett ersetzt wird, was zusätzlich mit einem hohen Wärmeeintrag während einer Schweißreparatur verbunden ist. Der hohe Wärmeeintrag kann Heißrissbildung verursachen und darüber hinaus ergibt sich ein hoher Nacharbeitungsaufwand aufgrund von großem Schweißaufmaß. Des Weiteren führt ein hoher Wärmeeintrag zu Verzug, der nur durch aufwendige Spannvorrichtungen und zusätzlich nachgelagerte Richtvorgänge reduziert bzw. korrigiert werden kann.

Aus der EP 2 286 956 A1 ist ein Verfahren zum automatischen Reparieren von Maschinenbauteilen bekannt, wobei zunächst eine beschädigte erste Geometrie des Maschinenbauteils digital erfasst wird. Anschließend wird an der beschädigten Stelle Material abgetragen und die durch den Materialabtrag neu entstandene zweite Geometrie wiederum digital erfasst. In einem letzten Verfahrensschritt wird Material aufgetragen, wobei zur Steuerung des Materialauftragvorgangs die digitalisierten Daten der zweiten Geometrie verwendet werden.

In der WO 2009/105221 A2 wird ein Verfahren vorgeschlagen, bei dem anhand von optischen Referenzobjekten, die an einem zu reparierenden Bauteil angeordnet werden, eine Kontur des Bauteils phototopographisch aufgenommen wird, so dass die beschädigte Stelle digital abgebildet werden kann. Auf Basis des so gewonnenen digitalen Schadensbildes wird anschließend eine Reparatur des Bauteils vorgenommen.

Weiter ist aus der EP 2 484 481 A1 ein Verfahren zum Reparieren eines stark beschädigten Bauteils aus dem Heißgasbereich einer Gasturbine bekannt. Dabei wird zunächst der beschädigte Bereich des Bauteils entfernt, so dass ein Ausschnitt entsteht. Anschließend folgt eine Vermessung des Bauteils mit dem Ausschnitt, so dass auf Basis der so erlangten Messdaten ein Ersatzstück zum Einsetzen in den Ausschnitt möglich ist. In einem letzten Verfahrensschritt wird das Ersatzstück durch Fügen mit dem Bauteil verbunden.

Ferner ist es aus "Investigation of a 3D non-contact measurement based blade repair integration system" (Gao Jian et al., Aircraft Engineering and Aerospace Technology, 2005, 77. Jg., Nr. 1, S. 34-41) bekannt, ein Gasturbinenbauteil zu reparieren, indem zunächst die beschädigte Bauteilgeometrie digital erfasst wird und anschließend basierend auf gewonnenen Daten eine Reparaturstrategie entwickelt wird. Während des Reparaturvorgangs ist die Gasturbinenschaufel beispielsweise auf einem Manipulator mit zwei Freiheitsgraden angeordnet.

Schließlich offenbart "An integrated adaptive repair solution for complex aerospace components through geometry reconstruction" (Gao Jian et. al, The International Journal of Advanced Manufacturing Technology, 2008, 36, Jg., Nr. 11-12, S. 1170-1179) eine ähnliche Vorrichtung, mit der ein vollständiges dreidimensionales digitales Abbild einer Gasturbinenschaufel zum Zwecke einer späteren Reparatur erstellt werden kann.

FR 2 897 550 A1 offenbart die Verwendung eines Roboters beim Laser-Pulver-Auftragsschweißen.

EP 2 206 575 A1 offenbart eine Vorrichtung zur Reparatur der Schaufeln von BLISK-Trommeln mittels Laserstrahlauftragsschweißen.

EP 1 422 380 A2 offenbart ein Verfahren zur automatisierten Reparatur von geschädigten Schaufeln eines Kompressors oder einer Turbine.

Der Erfindung liegt demzufolge die Aufgabe zugrunde, ein verbessertes Verfahren und eine entsprechende Vorrichtung zur Reparatur eines Flugzeug- und/oder Gasturbinen-Bauteils bereitzustellen.

Die Erfindung löst diese Aufgabe mit den Merkmalen der unabhängigen Ansprüche. Weitere bevorzugte Ausgestaltungen der Erfindung sind den Zeichnungen, den Unteransprüchen und der zugehörigen Beschreibung zu entnehmen.

Zur Lösung der Aufgabe wird somit erfindungsgemäß ein Verfahren zur Reparatur eines Flugzeug- oder Gasturbinen-Bauteils vorgeschlagen, wobei das Verfahren die automatisierten Schritte gemäß Anspruch 1 umfasst.

Das erfindungsgemäße Verfahren ist in der Lage, auf Basis erfasster Schadensinformation, die während der automatischen Inspektion bzw. Rissprüfung generiert wird, vollautomatischadaptiv eine Strategie zur Reparatur des Bauteils auszuwählen und/oder zu definieren und diese anschließend selbstständig durchzuführen. Erfindungsgemäß verfügt hierzu eine mit der Datenverarbeitungseinheit verbundene Datenbank über vordefinierte Schadensfälle und Ausprägungsformen, die mit dem jeweils aktuell vorliegenden Schaden verglichen werden. Die verschiedenen Schadensfälle und/oder Ausprägungsformen können jeweils wiederum mit konkreten nominalen Reparaturprogrammen verknüpft sein.

Anschließend wird die korrekte Reparaturmaßnahme ausgewählt. Neben vordefinierten Schadensgeometrien werden auch bestimmte Reparaturlogiken, die Position der Schäden auf dem Bauteil, der Zusammenhang eines Einzelschadens in einem Schadenscluster, Technologieinformationen, zum Beispiel verfügbare Fräsergrößen, sowie in der Vergangenheit definierte Reparaturstrategien in die Definition der Bearbeitungsstrategie einbezogen. Vorzugsweise erfolgt dazu ein durchgängiger Datentransfer zwischen automatischer Inspektion und automatischer Bearbeitung.

Das erfindungsgemäße Verfahren ermöglicht es zudem, sämtliche Beschädigungen und die durchgeführten Reparaturmaßnahmen bauteilspezifisch über den gesamten Lebenszyklus des Bauteils zu dokumentieren. Dazu wird vorzugsweise ein Computerprogramm vorgesehen, das in einer Datenbank automatisch sämtliche Befunde sowie Bauteil-, Reparatur- und Technologieinformationen abspeichert. Dadurch können Schäden über den Bauteillebenszyklus verfolgt werden, um daraus Rückschlüsse auf die Signifikanz bzw. Notwendigkeit einer Reparaturmaßnahme zu ziehen.

Durch das erfindungsgemäße Verfahren können die Prozesszeiten verkürzt sowie die Arbeitsproduktivität, die Reproduzierbarkeit und die Prozessstabilität und -qualität signifikant gesteigert werden.

Beispielsweise kann die Größe der Wärmeeinflusszone beim Schweißen durch die automatisierte Reparaturschweißung verringert bzw. stark reduziert werden, welches sich positiv auf die Materialeigenschaften auswirkt.

Zudem können durch den geringeren Wärmeeintrag die Schweißverformungen reduziert werden. Dadurch fallen die sonst üblichen Richtprozesse weniger aufwendig aus, oder einzelne Durchläufe können gänzlich eingespart werden.

Daneben kann auch eine verbesserte Oberflächenbeschaffenheit durch den automatischen spanenden Bearbeitungsprozess erreicht werden. Die Rauheit und Rautiefe sind weniger chaotisch und zufällig in ihrer Verteilung und Größe. Durch die standardisierten Bearbeitungen, insbesondere Fräsungen, können definierte Oberflächenbeschaffenheiten erreicht werden, welches sich vorteilhaft auf eine Schweißung auswirken kann.

Auch für die Detektionsfähigkeit der automatischen Rissprüfung ist eine vergleichsweise homogene Oberflächenstruktur vorteilhaft. Aufgrund der automatischen Prozessführung lässt sich der die Beschädigung einschließende Bearbeitungsbereich gegenüber dem manuellen Prozess lokal deutlich reduzieren. Dies hat den stets angestrebten geringen Abtrag von Grundmaterial zur Folge. Zudem ermöglicht die automatische Prozessführung eine signifikante Reduktion des sonst üblichen Schweißaufmaßes, was ebenfalls einen geringeren Zerspanungsaufwand und Materialabtrag zur Folge hat.

Vorzugsweise wird das Bauteil vor dem Schritt a) und/oder f) automatisch gerichtet. Die IST-Geometrien werden vorzugsweise mit einem geeigneten Sensor, beispielsweise einem Laser-Linien-Scanner, erfasst und zur Berechnung geeigneter Richtparameter von einem Computerprogramm genutzt. Vorzugsweise von einer Robotereinheit mit geeignetem Richt-Werkzeug, beispielsweise mit einem hebelartigen Werkzeug, wird das Bauteil in die Soll-Form gebracht. Die Richtparameter sowie alle vom System generierten Daten, wie beispielsweise "Numeric Control" (NC) Daten, werden in geeigneter Art und Weise dokumentiert und abgespeichert.

Im Schritt a) werden die Geometrie- und/oder Schadensdaten vorzugsweise in einem informationstechnisch verwertbaren Datenformat, also mit einer für die automatisierte Reparatur erforderlichen Informationsdichte und Datenqualität, abgespeichert. Als Datenformat werden vorzugsweise XML-Dateien oder CAD-Modelle mit Polygonzügen der Schäden oder eine hochaufgelöste Punktewolke mit 3D-Geometriedaten jedes Einzelschadens und/oder bereits vorgefilterter und zusammengefasster Einzelschäden eingesetzt. Das Verfahren zur Rissprüfung, insbesondere das zur Rissprüfung eingesetzte Weißlicht-Interferometrie Verfahren, ist in der DE 10 2011 103 003 A1 beschrieben.

Die ermittelten Messdaten enthalten Informationen über Risse, Verbrennungen, Geometrieverformungen und/oder andere Beschädigungen. Bei der Erfassung dieser Geometriedaten im Rahmen der automatischen Rissprüfung ist es vorteilhaft, die unterschiedlichen Reflektionseigenschaften der Bauteiloberfläche, externe Beleuchtungseinflüsse, beispielsweise durch Sonnenstrahlen oder Hallenbeleuchtung, sowie einkoppelnde Schwingungen, beispielsweise durch vorbeifahrende Gabelstapler oder LKWs, zu berücksichtigen.

Dazu werden vorzugsweise ein vollständig entkoppelter Messaufbau sowie optische Sensortechnik in Verbindung mit einer speziellen Lineareinheit eingesetzt. Erfindungsgemäß erfolgt während der Rissprüfung eine individuelle Stromregelung in jedem einzelnen Pixel. Der Kamerachip verfügt somit über eine eigene Stromregelung je Pixel, so dass glänzende oder matte Oberflächen kein Problem darstellen und auch kleine Risse detektiert werden. Zusätzlich wird vorzugsweise eine schnelle Sensorbewegung vorgesehen, so dass der Sensor unempfindlich auf zuvor genannte Einflüsse reagiert. Durch die schnelle Sensorbewegung, die vorzugsweise durch eine Hochgeschwindigkeitslineareinheit realisiert wird, können Schwingungseinflüsse ausgeglichen werden, so dass unter Umständen auf eine Entkopplung verzichtet werden kann.

Vor der automatischen Rissprüfung werden das Bauteil und/oder die Sensoreinheit vorzugsweise kalibriert, um eine korrekte Orientierung bzw. Positionierung im Raum zu erreichen. Die Kalibrierung des Bauteils erfolgt vorzugsweise über eine definierte Spannposition in der Vorrichtung und in der Anlage, zum Beispiel durch ein Nullpunktspannsystem. Die Sensoreinheit, die vorzugsweise einen hochauflösenden Detektionssensor sowie einen Triangulationssensor zur Geometrieerfassung und eine Lineareinheit umfasst, wird an einem Prüfkörper kalibriert. Die Kalibrierung erfolgt vorzugsweise durch eine sogenannte TCP (Tool Center Point) Kalibrierung. Zudem kann ein Drehachsensystem einer Handhabungseinrichtung für das Verfahren kalibriert werden. Hierzu wird vorzugsweise ein eigenes Messprogramm vorgesehen.

Die Einzelbildfeldgröße, die von der Sensoreinheit, bevorzugt durch das zuvor beschriebene Weißlicht-Interferometrie Verfahren, erfasst werden kann, bewegt sich typischerweise im Bereich weniger Millimeter. Da eine Auswertung der erfassten Einzelbilder in der Regel nicht vorteilhaft ist, werden zur Ermittlung der Geometrie- und/oder Schadensdaten im Rahmen der Rissprüfung die erfassten Einzelbilder vorzugsweise durch Transformations- und Registrierungsprozesse zu einem Gesamtbild des Bauteils zusammengesetzt. Dadurch wird der Problematik entgegengewirkt, dass sich Schäden über die Grenzen eines Bildfeldes ausdehnen und dadurch der Bezug zwischen Einzelbildposition und Schadensposition verloren gehen kann.

Vorzugsweise erfolgt zur Auswertung der Gesamtpunktewolke des Bauteils eine Zerlegung in Teilbereiche, welche einzeln auf Schäden untersucht werden, und wobei Konstruktionsmerkmale und Beschädigungen ermittelt und anhand von Modellparametern unterschieden werden. Unter Konstruktionsmerkmalen sind in diesem Zusammenhang beispielsweise gewünschte Aussparungen oder ähnliches zu verstehen.

Es ist ferner bevorzugt in Teilbereichen detektierte Schäden, die bis an die Grenze des Bereichs heranreichen, zu markieren und zur Analyse des angrenzenden Bereichs zu berücksichtigen.

Ziel ist es, die Position von Beschädigungen auf dem gesamten Bauteil zu identifizieren. Homogene Transformationen erlauben zunächst ein grobes Zusammensetzen der Einzelbilder bzw. einzelnen Punktewolken. Insbesondere bei Posenänderungen der Handhabungseinrichtung können die Zusammensetzungsfehler dabei jedoch schnell intolerabel werden, da hier sowohl der Positionierungsfehler als auch der Kalibrierungsfehler direkt eingehen. Vor diesem Hintergrund werden die Punktewolken der Einzelbilder vorzugsweise feinregistriert. Bei einer Feinregistrierung werden die Einzelbilder präzise zusammengeführt, vorzugsweise unter Zuhilfenahme von Transformationen, beispielsweise unter Verwendung sogenannter ICP (Iterative Closest Point) Algorithmen.

Aufgrund ihrer Größe bzw. Datenmenge ist die entstandene Gesamtaufnahme jedoch für eine Schadensauswertung nicht immer vorteilhaft. Vorteilhaft und bevorzugt ist hingegen, die Aufteilung der Gesamtaufnahme bzw. der Gesamtpunktewolke in geeignete Einzelbereiche, die in ihren Abmaßen größer als die Einzelbilder sind, und welche anschließend auf Schäden untersucht werden. Dabei werden Konstruktionsmerkmale (z.B. gewollte Aussparungen) und Beschädigungen gefunden und durch einen Vergleich mit Modellparametern unterschieden. Schäden, die zum Rand des Bereichs verlaufen, werden markiert und in der Analyse des angrenzenden Bereichs berücksichtigt. Im Anschluss an die Auswertung der Einzelbereiche werden die detektierten Schäden in einer für die anschließende automatische Bearbeitung vorteilhafte Weise zusammengefasst und dieser zur Verfügung gestellt.

Anhand der Geometrie- und Schadensdaten entwickelt ein Computerprogramm in der Datenverarbeitungseinheit nach bestimmten Kriterien, die vorzugsweise wirtschaftliche als auch technische Optimierungen umfassen, vollautomatisch und adaptiv eine Reparaturstrategie.

Das Programm wählt aus einer Vielzahl unterschiedlicher Reparaturen aus, die entweder speziell auf einen bestimmten Schaden zugeschnitten sein können, oder die vorzugsweise verschiedene Einzelschäden gemeinsam abdecken können, wie beispielsweise bei einer Flicken-Reparatur.

Bei der Flicken-Reparatur wird zunächst ein Teilbereich aus dem beschädigten Bauteil herausgefräst. Anschließend kann entweder ein Ersatzstück (aus einem sog. Spenderbauteil) eingesetzt oder der Flicken durch generatives (Laser-)Auftragsschweißen direkt in dem vorgefrästen Bereich erzeugt werden.

Eine andere bevorzugte Methode ist das "Selective-Laser-Melting" (SLM), bei dem ebenfalls ein Heraustrennen aus Spenderbauteilen entfallen kann. Bei diesem Verfahren wird der zu verarbeitende Werkstoff in Pulverform in einem Pulverbett durch einen Laserstrahl aufgeschmolzen und erstarrt anschließend zu einer festen Materialschicht. Dadurch lassen sich geometrisch komplexe Formen, wie beispielsweise ein Flicken, erzeugen.

Bei einer bevorzugten standardisierten Reparaturstrategie werden benachbarte Risse zu Rissclustern zusammengefasst und in einem Schritt bearbeitet. Beispielsweise können standardisierte Fräsungen erstellt und mittels standardisierter Schweißprogramme geschweißt werden.

Im Anschluss an die Definition der Bearbeitungsstrategie erfolgt die Bahnplanung der Teilprozesse. Dieser Arbeitsschritt wird ebenfalls durch die zentrale Datenverarbeitungseinheit ausgeführt. Die Datenverarbeitungseinheit fungiert vorzugsweise als übergeordnete Einheit, welche ein Master-Reparaturprogramm, auch "globales" Reparaturprogramm genannt, erstellt. Es ist somit bevorzugt, dass die Datenverarbeitungseinheit unter Verwendung der im Schritt a) ermittelten Geometrie- und/oder Schadensdaten sowie vordefinierter Technologieparameter automatisch eine Reparaturstrategie definiert und ein globales Reparaturprogramm des Bauteils erstellt.

Vorzugsweise werden im Schritt b) durch die Datenverarbeitungseinheit Fräsbahnen und/oder eine Frässtrategie automatisch generiert. Anders ausgedrückt wird von der Datenverarbeitungseinheit automatisch ein Fräsprogramm definiert und/oder ausgewählt, welches den Code für die Fräsbahnen enthält.

Die Datenverarbeitungseinheit umfasst vorzugsweise ein Computerprogramm, welches unter Verwendung der Schadensinformationen und der Werkzeugparameter Maschinenparameter, wie beispielsweise Drehzahlen und Vorschübe, und Verfahrbewegungen (Bahnplanung) festlegt. Zudem wählt die Datenverarbeitungseinheit bzw. das Computerprogramm die geeigneten Werkzeuge aus und passt anhand der erfassten IST-Geometrien des Bauteils das nominelle Bearbeitungsprogramm den Schadensgeometrien an und speichert dieses als adaptives Bearbeitungsprogramm ab.

Das adaptive Bearbeitungsprogramm, beispielsweise in Form eines NC-Codes, wird anschließend von einer Robotereinheit ausgeführt. Zur Steigerung der Genauigkeit wird der Arbeitsraum der Robotereinheit vorzugsweise eingeschränkt, beispielsweise wird ein Drehtisch vorgesehen und die lokale Umgebung der Beschädigung eingemessen. Vorzugsweise ist ein erneuter Messvorgang vor und/oder nach dem Fräsen bzw. vor und/oder nach dem Schweißen nicht erforderlich.

Die Bearbeitung ohne zusätzliche Messzyklen verbessert die Produktivität des Systems deutlich. Hierfür sind stabile Prozessparameter, ein geringer Bauteilverzug, ein präzises Spannsystem und ein Handhabungssystem mit einer hohen Positionier- und Wiederholgenauigkeit vorteilhaft. Sollte eine Bearbeitung ohne In-Prozess Messen nicht möglich sein, so besteht die Möglichkeit, taktil die Geometrie lokal im Bearbeitungsbereich zu vermessen. Vorzugsweise erfolgt die Vermessung optisch mittels eines Laser-Linien-Scanners. Die erfassten Messdaten können wiederum im adaptiven Bearbeitungsprogramm durch die Datenverarbeitungseinrichtung berücksichtigt werden. Des Weiteren wird die Positionier- und Wiederholgenauigkeit der Handhabungseinrichtung vorzugsweise mittels Lasertracker erhöht.

Die Berechnung der geeigneten Schweißbahnen erfolgt vorzugsweise über die Geometriebestimmung des abgetragenen Fräsvolumens sowie durch Adaption der nominalen Schweißprogramme, welche in der Datenverarbeitungseinheit hinterlegt sind. Vorzugsweise werden zur Ermittlung der geänderten Geometriedaten des Bauteils die im Schritt a) ermittelten Geometrie- und/oder Schadensdaten mit den im Schritt b) generierten Fräsbahnen in der Datenverarbeitungseinheit kombiniert und/oder ausgewertet.

Somit werden die Schweißbahnen vorzugsweise aus dem adaptierten Fräsprogramm und den Bauteilgeometrieinformationen abgeleitet. Zudem fließen Technologieparameter und grundsätzliche Schweißstrategien, die ebenfalls in der Datenbank der Datenverarbeitungseinheit hinterlegt sind, in die Bahnplanung des Schweißprozesses ein. Als wesentlicher Vorteil ergibt sich daraus, dass auf eine Vermessung der IST-Geometrie verzichtet werden kann. Das adaptierte Schweißprogramm wird somit bevorzugt auf Basis der ohnehin vorhandenen Geometrieinformationen der automatischen Rissprüfung in Verbindung mit den Informationen der zuvor durchgeführten Fräsbearbeitung und dem nominalen Schweißprogramm erstellt.

Die automatisierte Reparaturschweißung wird demnach vorzugsweise auf Basis der geänderten Geometriedaten des Bauteils automatisch durch die Datenverarbeitungseinheit festgelegt. Die so vorbereiteten Risse und/oder anderen Beschädigungen werden dann erfindungsgemäß durch eine Robotereinheit mit einem Laser-Pulver-Auftragsschweißverfahren geschlossen.

In einer anderen bevorzugten Ausführungsform werden die geänderten Geometriedaten durch eine automatische Abtastung des Bauteils ermittelt und diese vorzugsweise in den jeweiligen Bearbeitungsprogrammen berücksichtigt. In diesem Fall wird die Fräsbahn optisch erfasst und die Geometrieinformationen an den nachgelagerten Prozessschritt weitergegeben, beispielsweise an die Bahnplanung des Schweißprozesses.

Vorzugsweise erfolgt im Anschluss an die automatisierte Reparaturschweißung eine automatisierte Berechnung des Nacharbeitungsbedarfs. Weiter bevorzugt erfolgt in einem Zwischenschritt eine Berechnung der Schweißvolumengeometrie und der Nacharbeitungsbedarf wird auf Basis der Schweißvolumengeometrie automatisch ermittelt.

Ähnlich wie bei dem Schweißprogramm kann dies automatisiert auf Grundlage der vorhandenen Daten und nominalen Programme erfolgen, ohne dass das Bauteil tatsächlich neu vermessen werden muss. Nominale Programme sind generelle Bearbeitungsstrategien für Bauteile, so wie sie für den Neuzustand des Bauteils und der damit verbundenen Geometrie wären. Adaptive Programme weisen Anpassungen an das vorliegende IST-Bauteil, beispielsweise bestimmte Bahnparameter zum Ausgleich besonderer Geometrien auf, wohingegen bauteilunabhängige Parameter, wie beispielsweise die Schnittgeschwindigkeit, gleich bleiben. In dem zuvor beschriebenen bevorzugten Ausführungsbeispiel wird automatisch ein adaptiertes Bearbeitungsprogramm zur Fräsnacharbeit erstellt.

In einer anderen bevorzugten Ausführungsform wird die tatsächliche Schweißvolumengeometrie durch ein Vermessen, beispielsweise automatisiertes Abtasten, der Schweißnähte ermittelt und kann entsprechend in einem adaptierten Nacharbeitsprogramm berücksichtigt werden.

Da aufgrund der automatisierten Schweißungen vergleichsweise wenig Verzug auftritt, kann auch die Nacharbeit reduziert werden oder sogar entfallen. Es kann zudem ein Schweißen ohne Aufmaß ermöglicht werden.

Der Schweißprozess verfügt vorzugsweise über eine eigene Online-Prozessüberwachung. Diese ist in der Lage, anhand bestimmter Informationen, wie beispielsweise Schmelzbadtemperatur und/oder Schmelzbadgröße, Fehler oder Abweichungen im Prozess zu erkennen und selbsttätig eine Regelung vorzunehmen. Eine Regelung kann beispielsweise das erneute Schweißen einer bestimmten Position sein.

Wie bereits weiter oben ausgeführt, wird das Bauteil vorzugsweise nach dem Schritt e) bzw. vor dem Schritt f) vollautomatisch gerichtet. Auf das Richten vor dem Schritt f) kann jedoch unter Umständen auch verzichtet werden, da die Wärmeeintragszone durch das erfindungsgemäße Verfahren im Vergleich zu dem üblichen WIG-Schweißen deutlich reduziert ist. Es gelangt weniger bzw. nur stark fokussierte und nicht großflächig eingebrachte Wärme in das Bauteil, wodurch nur geringe bzw. zulässige Verformungen erzeugt werden.

Bei dem möglichen zweiten Richtdurchlauf oder beim Reparaturschweißen entstandene Risse werden in der anschließenden zweiten Rissprüfung detektiert und gegebenenfalls auf die gleiche Art und Weise repariert. Vorzugsweise werden somit die Verfahrensschritte a) bis f) mehrmals hintereinander an demselben Bauteil durchgeführt.

Sobald die Rissprüfung nach einem Reparaturverfahren keine Schäden mehr detektiert, kann das Verfahren beendet werden. Alle Reparaturschritte werden ausführlich in einem Protokoll bzw. einer Datenbank dokumentiert. Dies geschieht bevorzugt bauteilspezifisch, alle Informationen über das Bauteil werden bauteilspezifisch, bspw. unter Bezugnahme auf die Teilenummer (part number) und/oder Seriennummer (serial number) des Bauteils, gespeichert.

Vorzugsweise erfolgt eine durchgängige Kommunikation der Teilprozesse, wie beispielsweise der Rissprüfung bzw. Inspektion, der Schweiß-Vorbereitung, dem Schweißen, der Schweiß-Nacharbeit miteinander. Weiterhin wird vorzugsweise eine Kompatibilität der unterschiedlichen Daten und Informationsflüsse untereinander vorgesehen, wodurch die vorteilhafte Prozessautomation erreicht werden kann. Die verschiedenen eingesetzten Computerprogramme, wie beispielsweise Bildverarbeitung der Rissprüfung, Reparaturstrategie, Bahnplanung und Ablaufsteuerung, weisen zusätzlich bevorzugt Kommunikationsschnittstellen, gegebenenfalls in Kombination mit Post-Prozessoren für die Robotereinheiten, auf.

Teilprozessübergreifend sind sämtliche Computerprogramme vorzugsweise in das Masterreparaturprogramm oder kurz "Masterprogramm" integriert. Das Masterprogramm als Teil der Datenverarbeitungseinheit beinhaltet unterschiedlichste Funktionalitäten, die eine möglichst einfache Ablaufsteuerung und bei Bedarf Eingriff in den automatischen Prozess durch den Bediener erlauben.

Gut geeignet ist das erfindungsgemäße Verfahren für solche Flugzeug- oder Gasturbinen-Bauteile, die als Brennkammerbauteil eines Flugzeugtriebwerks eingesetzt werden. Brennkammerbauteile unterliegen hohen Belastungen und die Rissprüfung und Reparatur ist üblicherweise mit hohem Aufwand verbunden, der durch das erfindungsgemäße Verfahren deutlich reduziert werden kann. Das Gasturbinenbauteil kann dabei beispielsweise einen Nickel- oder Kobaltbasiswerkstoff aufweisen.

Vorzugsweise ist das Bauteil ein Gasturbinenbauteil aus einer Superlegierung. Die Reparatur von Bauteilen aus Superlegierungen ist generell aufgrund der speziellen Materialeigenschaften kombiniert mit den luftfahrtrechtlichen Ansprüchen an Reparaturen komplex. Das erfindungsgemäße Verfahren ermöglicht es, solche hochbelasteten und teuren Bauteile automatisiert zu reparieren.

Zur Lösung der Aufgabe wird erfindungsgemäß eine Vorrichtung zur Reparatur eines Flugzeug- oder Gasturbinen-Bauteils mit den Merkmalen des Anspruchs 12 vorgeschlagen.

Der Drehtisch kann vorzugsweise um seine eigene Achse gedreht werden, wodurch das auf ihm platzierte Bauteil beispielsweise von einer Robotereinheit gut bearbeitet werden kann. Vorzugsweise umfasst die Vorrichtung ein automatisiertes Regallager, einen oder mehrere Drehtische und eine oder mehrere Robotereinheiten. In dem Regallager werden verschiedene Bauteile gelagert und über ein Transportsystem zu den jeweiligen Bearbeitungsstationen transportiert, an denen die Robotereinheiten angeordnet sind.

Die Erfindung wird im Folgenden anhand bevorzugter Ausführungsformen unter Bezugnahme auf die beigefügten Figuren erläutert. Dabei zeigt:
- Fig. 1: eine Darstellung einer erfindungsgemäßen Vorrichtung mit mehreren Robotereinheiten; und
- Fig. 2: eine Darstellung einer weiteren Ausführungsform einer erfindungsgemäßen Vorrichtung.

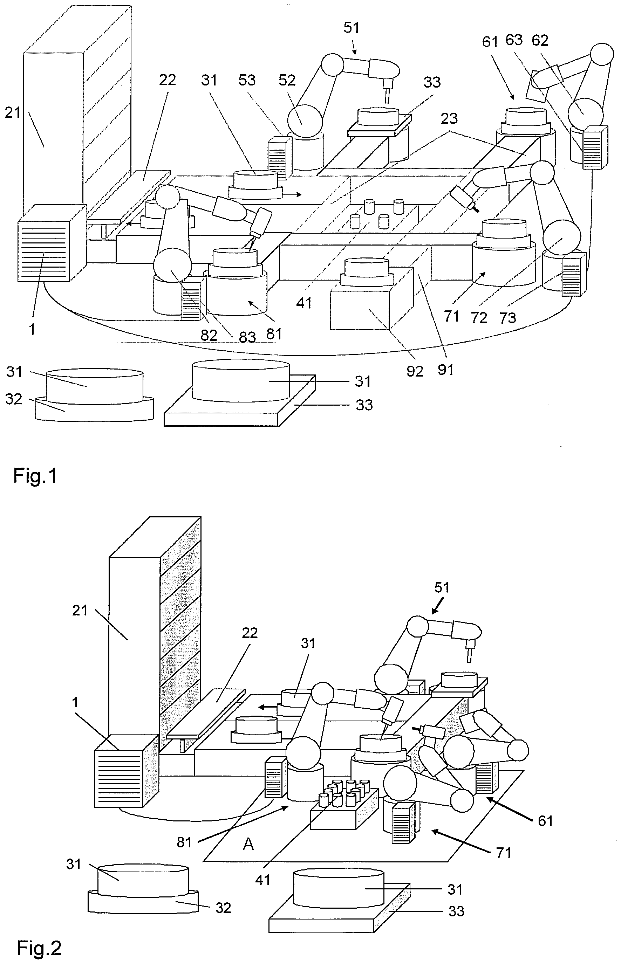

In der Fig. 1 ist ein Bauteil 31 dargestellt, welches auf einem Werkstückträger 32 angeordnet ist. Vorzugsweise werden mehrere Varianten von Werkstückträgern 32 für unterschiedliche Bauteile 31 vorgesehen. Ein Werkstückträgertyp ist vorzugsweise für eine Gruppe unterschiedlicher Komponentenmuster verwendbar. In diesem Ausführungsbeispiel handelt es sich um ein Brennkammerbauteil aus einer Superlegierung, welches durch die dargestellte Vorrichtung repariert wird.

Die dargestellte Vorrichtung umfasst ein Transportsystem 23, eine Datenverarbeitungseinheit 1 und mehrere unterschiedliche Bearbeitungsstationen; eine Richtstation 51, eine Rissprüfungsstation 61, eine Frässtation 71 und eine Schweißstation 81. Ein Werkzeugmagazin 41 stellt benötigte Werkzeuge zur Verfügung.

Das Transportsystem 23, welches vorzugsweise ein automatisiertes Regallager 21, ein Schienensystem und eine Hubstation 22 umfasst, dient zur Werkstückzuführung und dem Transfer zwischen den verschiedenen Bearbeitungsstationen. Im Regallager werden vorzugsweise sowohl Bauteile 31 als auch Werkstückträger 32 gelagert. Die Entnahme eines Bauteils 31 und des Werkstückträgers 32 erfolgt vollautomatisch in Abhängigkeit des zur Bearbeitung anstehenden Auftrags. Vorzugsweise werden die Aufträge priorisiert zur Bearbeitung eingesteuert. Die Priorisierung wird von dem für das Werk ganzheitliche Planungs- und Steuerungsprogramm vorgegeben.

Die zentrale Datenverarbeitungseinheit 1 steht mit den verschiedenen zur Bearbeitungsstation gehörenden Steuereinheiten 53, 63, 73, 83 in Verbindung. An jeder Bearbeitungsstation ist zudem eine zugehörige Robotereinheit 52, 62, 72, 82 angeordnet. Bei einer Robotereinheit 52, 62, 72, 82 kann es sich um Roboter mit unterschiedlicher Kinematik handeln. In vorteilhaften Ausführungsbeispielen werden, wie auch in Fig. 1 dargestellt, Gelenkarmroboter eingesetzt. Es können jedoch auch CNC-Bearbeitungsmaschinen oder Portalroboter mit linearen bzw. kartesischen Bewegungsachsen verwendet werden, welche eine höhere Genauigkeit erreichen können. Zudem kann auch eine oder mehrere Robotereinheiten 52, 62, 72, 82 mit paralleler Kinematik eingesetzt werden.

Das Bauteil 31 wird in das Regallager 21 eingelagert und die erforderlichen Auftragsinformationen werden über die zentrale Datenverarbeitungseinheit 1 in die Steuerung zwecks Auftragspriorisierung und Auswahl des Werkstückträgers über einen Bar Code oder Data Matrix Code eingelesen. Vor Beginn der Reparatur erfolgt die Auslagerung der Richtvorrichtung 33 auf eine Hubstation 22 als Teil des Transportsystems 23. Bei der Richtvorrichtung 33 handelt es sich um eine Vorrichtung, die über eine automatisch verstellbare Richtapparatur verfügt, die globale Bauteilverformungen (beispielsweise den Bauteildurchmesser) korrigiert. Anschließend wird das Bauteil 31 auf der Richtvorrichtung 33 ausgelagert.

Das Richten erfolgt bevorzugt auf einem eigenen Träger, um eine möglichst große Kontaktfläche zu ermöglichen, wodurch die Kräfte zum Richten gleichmäßiger in das Bauteil 31 eingeleitet werden können. Bei den anschließenden Bearbeitungsformen ist eine kleine Kontaktfläche vorteilhaft und bevorzugt, da dadurch ein großer Bearbeitungsbereich ermöglicht werden kann.

Über eine vorzugsweise mechanische Schnittstelle zwischen Richtvorrichtung 33 und Hubstation 22 wird das Bauteil 31 in einer definierten Lage zur Richtvorrichtung 33 gespannt. Alternativ kann das Bauteil 31 auf der Richtvorrichtung 33 au-βerhalb der Anlage manuell gerüstet und anschließend in das Regallager 21 eingelagert werden.

Über das Transportsystem 23 gelangt das Bauteil mit Richtvorrichtung 33 zur Richtstation 51. Die Positionierung erfolgt vorzugsweise durch ein Nullpunktspannsystem. Über einen optischen Sensor wird die IST-Geometrie aufgenommen.

Der Sensor kann durch einen Werkzeugwechsel der Robotereinheit 52 aufgenommen werden oder stationär neben der Richtstation 51 montiert sein. Die zentrale Datenverarbeitungseinheit 1 legt basierend auf der IST-Geometrie geeignete Parameter für das Richtprogramm fest und sendet diese an die Steuereinheit 53 der Richtstation 51.

Durch die Robotereinheit 52 in Kombination mit geeigneten Richtwerkzeugen und der automatisch angetriebenen Richtvorrichtung 32 wird das Bauteil 31 in Form gebracht. Das Richten umfasst vorzugsweise die Korrektur von lokalen als auch globalen Verformungen. Anschließend wird das Bauteil 31 zusammen mit Richtvorrichtung 33 per Transportsystem 23 zurück zur Hubstation 22 befördert. In einem Wechselprozess, ausgeführt von Hubstation 22 in Kombination mit Regallager 21, wird die Richtvorrichtung 33 wieder eingelagert und das Bauteil 31 auf einem Werkstückträger 32 für die Bearbeitung gespannt.

Alternativ kann der Wechselprozess auch außerhalb der Anlage manuell durchgeführt werden und anschließend im Regallager 21 eingelagert werden.

Anschließend werden Bauteil 31 und Werkstückträger 32 mittels Transportsystem 23 zur Rissprüfstation 61 transportiert.

An der Rissprüfungsstation 61 wird das Bauteil 31 vorzugsweise vollautomatisch auf Beschädigungen, wie beispielsweise Risse und Verbrennungen, untersucht und deren exakte Position an die Datenverarbeitungseinheit 1 weitergeleitet.

Die Datenverarbeitungseinheit 1 klassifiziert die von der Rissprüfungsstation 61 erhobenen und aufbereiteten Schadensdaten in Schadenskategorien. Für jede Schadenskategorie wird vollautomatisch eine passende Bearbeitungsstrategie gewählt. Erfüllen beispielsweise zwei Beschädigungen vordefinierte, für eine Clusterung notwendige Bedingungen, beispielsweise bestimmte Positionen der Schäden am Bauteil, wird durch die Datenverarbeitungseinheit 1 vollautomatisch eine Reparaturstrategie definiert.

Es werden beispielsweise zwei Einzelschäden zusammengefasst und mittels standardisierter Fräsung und Schweißung gemeinsam repariert. Die zugrundeliegende Datenverarbeitungseinheit 1 bzw. das zugrundeliegende Computerprogramm wird dabei auch als Expertensystem bezeichnet.

Anschließend werden auf Basis der Reparaturstrategie, der Schadensinformationen und der nominalen Bearbeitungsprogramme die auf die IST-Geometrie adaptierten Bearbeitungsprogramme der jeweiligen Teilprozesse erstellt. Die adaptierten Programmbausteine werden zu einem globalen Reparaturprogramm unter Berücksichtigung von Taktzeit und Wirtschaftlichkeit zusammengefügt und anschließend an die Steuereinheit 73 der Frässtation 71 und die Steuereinheit 83 der Schweißstation 81 in Form eines Numeric Control (NC) Codes gesendet. Vor Reparaturbeginn hat der Bediener die Möglichkeit das globale Reparaturprogramm mittels einer Mensch-Maschine-Schnittstelle, auch HMI (Human Machine Interface) genannt, anzupassen. Es besteht somit bevorzugt die Möglichkeit einer Dateneingabe und/oder Datenbearbeitung an der Datenverarbeitungseinheit 1. Auf diese Weise kann bei Bedarf in die Reparatur eingegriffen werden. Das Bauteil 31 wird vom Transportsystem 23 zur Frässtation 71 eingetaktet. Eine Robotereinheit 72 vollzieht das von der Datenverarbeitungseinheit 1 adaptierte Fräsprogramm zur Schweiß-vorbereitung. Dazu entnimmt die Robotereinheit 72 die benötigten Werkzeuge aus dem Werkzeugmagazin 41. Die relative Bewegung von Fräser und Bauteil 31 erfolgt somit durch die Robotereinheit 72 und/oder einen Drehtisch.

Das gefräste Bauteil 31 wird darauf folgend der Schweißstation 81 zugeführt. Die adaptierten Nominalprogramme werden wiederum von einer Robotereinheit 82 ausgeführt. Erfindungsgemäß wird ein Laser-Pulver-Auftragsschweißen eingesetzt. Das geschweißte Bauteil 31 wird darauf folgend der Frässtation 71 (Schweiß-Nacharbeit) zugeführt, wo eine spanende Bearbeitung des Bauteils zur Nacharbeit der Schweißbereiche erfolgt. Die adaptierten Nominalprogramme werden wiederum von einer Robotereinheit 72 ausgeführt. Vorzugsweise ist die Schweiß-Nacharbeit (und damit der Transfer zur Frässtation 71) jedoch nicht erforderlich, da sich das Schweißaufmaß innerhalb der Toleranz befindet.

Die beim Schweißprozess entstandenen Verformungen sind in vorteilhaften Ausführungen so gering, das auf einen zweiten Richtprozess verzichtet werden kann oder diese Arbeiten am manuellen Arbeitsplatz 92 durchgeführt werden.

Anschließend wird das Bauteil 31 in einer zusätzlichen Rissprüfung auf neu entstandene Risse, die beispielsweise bei einem zweiten Richten und/oder dem Schweißen entstanden sein können, untersucht. Die eventuell neu entstandenen Risse werden analog zu dem ersten Reparaturdurchlauf bearbeitet und anschließend auf das Transportsystem 23 abgelegt und im Regallager 21 deponiert.

Für spezielle Anwendungsfälle, die beispielsweise nicht oder nur teilautomatisiert repariert werden können, ist eine zusätzliche manuelle Bearbeitung oder ein Eingriff in den automatisierten Prozess notwendig. Hierfür ist vorzugsweise eine Mensch-Maschine-Schnittstelle in Form eines manuellen Arbeitsplatzes 92 vorgesehen.

Die Verzweigung 91 ist zwischen Fräs- und Schweißstation 71, 81 angeschlossen, so dass der Mechaniker sowohl Schweiß-, Schweißvor- als auch die Schweißnachbearbeitung mit einem manuellen Zusatzeingriff unterstützen kann.

Der Mechaniker bearbeitet vorzugsweise das Bauteil 31, ohne dieses vorher dem Werkzeugträger 32 bzw. der Spannvorrichtung entnehmen zu müssen und aktiviert nach Abschluss seiner Arbeiten die automatische Wiedereintaktung in den Prozess. Messzyklen, die aufgrund des manuellen Eingriffs am Arbeitsplatz 92 erforderlich sind, werden durch die Datenverarbeitungseinheit 1 vorzugsweise automatisch eingeplant und auf der jeweiligen Bearbeitungsstation ausgeführt.

Die Fig. 2 zeigt ein weiteres Ausführungsbeispiel, in dem der Fräs- und Schweißprozess und die Rissprüfung zu einer einzelnen Bearbeitungsstation zusammengefasst sind. Das Richten wird weiterhin auf einer separaten Station durchgeführt.

Der Prozessablauf ist dem vorhergehenden Aufbau bis auf die Transportschritte zwischen den zusammengelegten Stationen identisch. Vorteile gegenüber der in der Fig. 1 dargestellten Vorrichtung sind beispielsweise geringere Anschaffungskosten und ein geringerer Platzbedarf der Anlage.

Nachteil dieser Variante ist beispielsweise die nur sequentiell mögliche Abarbeitung von Aufträgen. Es besteht auch in dieser Ausführungsform der Erfindung die Möglichkeit, den automatischen Prozessablauf mit manuellen Eingriffen an den dafür vorgesehenen Stationen zu unterstützen.

Vorzugsweise findet eine Unterstützung des Mechanikers durch eine Robotereinheit statt, welche beispielsweise das Halten eines Flickens in der richtigen Position vornimmt, damit diese manuell verschweißt werden kann. Die Mensch-Maschinen-Schnittstelle kann in diesem Fall durch eine Überwachungseinrichtung, die die Sicherheit des Mitarbeiters gewährleistet, umgesetzt werden. Der für Mechaniker zugängliche Bereich A ist in der Fig. 2 dargestellt.

Weiterhin können auch andere Ausführungsformen bevorzugt sein, wie beispielsweise eine Ausführungsvariante, die kartesische Bearbeitungsmaschinen umfasst. Die Robotereinheiten würden dann vorzugsweise lediglich die Werkstückzufuhr übernehmen.

### Bezugszeichenliste:

- 1: Datenverarbeitungseinheit
- 21: Regallager
- 22: Hubstation
- 23: Transportsystem
- 31: Bauteil
- 32: Werkstückträger
- 33: Richtvorrichtung
- 41: Werkzeugmagazin
- 51: Richtstation
- 52: Robotereinheit
- 53: Steuereinheit
- 61: Rissprüfungsstation
- 62: Robotereinheit
- 63: Steuereinheit
- 71: Frässtation
- 72: Robotereinheit
- 73: Steuereinheit
- 81: Schweißstation
- 82: Robotereinheit
- 83: Steuereinheit
- 91: Abzweigung
- 92: Arbeitsplatz

## Patentansprüche

1. Verfahren zur Reparatur eines Flugzeug- und/oder Gasturbinen-Bauteils (31), wobei das Verfahren die folgenden automatisierten Schritte umfasst:
a) Rissprüfung des Bauteils (31) mittels eines optischen Messverfahrens mittels Weißlicht-Interferometrie, wobei ermittelte Geometrie- und/oder Schadensdaten bauteilspezifisch gespeichert werden,
b) Generierung einer adaptiven Bearbeitungsstrategie anhand der ermittelten Geometrie- und/oder Schadensdaten in einer Datenverarbeitungseinheit (1),
c) spanende Bearbeitung des Bauteils (31),
d) Ermittlung der geänderten Geometriedaten des Bauteils (31),
e) Durchführung einer Reparaturschweißung, wobei die Reparaturschweißung durch eine Robotereinheit mit einem Laser-Pulver-Auftragsschweißverfahren durchgeführt wird,
f) Rissprüfung des Bauteils (31) mittels eines optischen Messverfahrens, wobei
eine mit der Datenverarbeitungseinheit (1) verbundene Datenbank über vordefinierte Schadensfälle und Ausprägungsformen verfügt, die im Verfahrensschritt b) mit dem jeweils aktuell vorliegenden Schaden verglichen werden, wobei während der Rissprüfung eine individuelle Stromregelung in jedem einzelnen Pixel erfolgt.

2. Reparaturverfahren nach Anspruch 1, **dadurch gekennzeichnet, dass** im Schritt b) durch die Datenverarbeitungseinheit (1) Fräsbahnen und/oder eine Frässtrategie automatisch generiert werden.

3. Reparaturverfahren nach einem der vorangegangenen Ansprüche, **dadurch gekennzeichnet, dass** das Bauteil (31) vor dem Schritt a) und/oder f) automatisch gerichtet wird.

4. Reparaturverfahren nach einem der vorangegangenen Ansprüche, **dadurch gekennzeichnet, dass** zur Ermittlung der Geometrie- und/oder Schadensdaten im Rahmen der Rissprüfung die erfassten Einzelbilder durch Transformations- und Registrierungsprozesse zu einem Gesamtbild des Bauteils (31) zusammengesetzt werden.

5. Reparaturverfahren nach Anspruch 4, **dadurch gekennzeichnet, dass** zur Auswertung der Gesamtpunktewolke des Bauteils (31) eine Zerlegung in Teilbereiche erfolgt, welche einzeln auf Schäden untersucht werden, und wobei Konstruktionsmerkmale und Beschädigungen ermittelt und anhand von Modellparametern unterschieden werden.

6. Reparaturverfahren nach Anspruch 4 und 5, **dadurch gekennzeichnet, dass** in Teilbereichen detektierte Schäden, die bis an die Grenze des Bereichs heranreichen, markiert werden und zur Analyse des angrenzenden Bereichs berücksichtigt werden.

7. Reparaturverfahren nach einem der vorangegangenen Ansprüche, **dadurch gekennzeichnet, dass** eine Datenverarbeitungseinheit (1) unter Verwendung der im Schritt a) ermittelten Geometrie- und/oder Schadensdaten sowie vordefinierter Technologieparameter automatisch eine Reparaturstrategie definiert und ein globales Reparaturprogramm des Bauteils (31) erstellt.

8. Reparaturverfahren nach einem der vorangegangenen Ansprüche, **dadurch gekennzeichnet, dass** die automatisierte Reparaturschweißung auf Basis der geänderten Geometriedaten des Bauteils (31) automatisch durch die Datenverarbeitungseinheit (1) festgelegt wird.

9. Reparaturverfahren nach einem der vorangegangenen Ansprüche, **dadurch gekennzeichnet, dass** die geänderten Geometriedaten durch eine automatische Abtastung des Bauteils (31) ermittelt werden.

10. Reparaturverfahren nach einem der vorangegangenen Ansprüche, **dadurch gekennzeichnet, dass** die Verfahrensschritte a) bis f) mehrmals hintereinander an demselben Bauteil (31) durchgeführt werden.

11. Reparaturverfahren nach einem der vorangegangenen Ansprüche, **dadurch gekennzeichnet, dass** das Bauteil (31) ein Gasturbinen-Bauteil aus einer Superlegierung ist.

12. Vorrichtung zur Reparatur eines Flugzeug- oder Gasturbinen-Bauteils (31), wobei die Vorrichtung mindestens einen Drehtisch zur Aufnahme des Bauteils (31) und/oder eines Werkstückträgers (32) aufweist und zur Durchführung des Verfahrens gemäß einem der Ansprüche 1 bis 11 eingerichtet ist, wobei die Vorrichtung zur Rissprüfung des Bauteils (31) mittels eines optischen Messverfahrens mittels Weißlicht-Interferometrie eingerichtet ist, wobei die Vorrichtung während der Rissprüfung zur individuellen Stromregelung in jedem einzelnen Pixel eingerichtet ist, wobei eine Robotereinheit vorgesehen ist, die zur Durchführung einer Reparaturschweißung mit einem Laser-Pulver-Auftragsschweißverfahren eingerichtet ist, wobei eine mit einer Datenverarbeitungseinheit (1) verbundene Datenbank über vordefinierte Schadensfälle und Ausprägungsformen verfügt, die mit dem jeweils vorliegenden Schaden vergleichbar sind.

13. Vorrichtung nach Anspruch 12, **dadurch gekennzeichnet, dass** die Vorrichtung ein automatisiertes Regallager (21), einen oder mehrere Drehtische und eine oder mehrere Robotereinheiten (52, 62, 72, 82) umfasst.

## Claims

1. Method for repairing an aircraft and/or gas turbine component (31), wherein the method comprises the automated steps of:
a) checking the component (31) for cracks using an optical measurement method using white light interferometry, wherein gathered geometric and/or damage data are stored in a component-specific manner,
b) generating an adaptive processing strategy on the basis of the gathered geometric and/or damage data in a data processing unit (1),
c) machining the component (31),
d) gathering the altered geometric data of the component (31),
e) carrying out repair welding, wherein the repair welding is carried out by a robot unit using a laser powder build-up welding method,
f) checking the component (31) for cracks using an optical measurement method, wherein a database which is linked to the data processing unit (1) contains predefined cases of damage and shapes which, in method step b), are compared with the damage which is currently present in each case,
wherein, while checking for cracks, current is individually regulated in each individual pixel.

2. Repair method according to claim 1, **characterised in that** milling paths and/or a milling strategy are automatically generated in step b) by the data processing unit (1).

3. Repair method according to any of the preceding claims, **characterised in that** the component (31) is automatically adjusted before step a) and/or f).

4. Repair method according to any of the preceding claims, **characterised in that**, in order to gather the geometric and/or damage data within the context of checking for cracks, the detected individual images are put together by transformation and registration processes to form a full image of the component (31).

5. Repair method according to claim 4, **characterised in that**, in order to analyse the total point cloud of the component (31), it is broken up into portions which are individually checked for damage, and structural features and damage being determined, and differentiated on the basis of model parameters.

6. Repair method according to claims 4 and 5, **characterised in that** damage detected in portions which reaches to the edge of the portion is marked and is taken into account for analysing the adjacent portion.

7. Repair method according to any of the preceding claims, **characterised in that** a data processing unit (1) automatically defines a repair strategy using the geometric and/or damage data gathered in step a) and predefined technological parameters, and produces a global repair program for the component (31).

8. Repair method according to any of the preceding claims, **characterised in that** the automated repair welding is automatically scheduled by the data processing unit (1) on the basis of the altered geometric data of the component (31).

9. Repair method according to any of the preceding claims, **characterised in that** the altered geometric data are gathered by automatically scanning the component (31).

10. Repair method according to any of the preceding claims, **characterised in that** the method steps a) to f) are carried out multiple times in succession on the same component (31).

11. Repair method according to any of the preceding claims, **characterised in that** the component (31) is a gas turbine component made of a superalloy.

12. Device for repairing an aircraft or gas turbine component (31), wherein the device comprises at least one rotary table for receiving the component (31) and/or a workpiece carrier (32) and is set up to carry out the method according to any of claims 1 to 11,
wherein
the device is set up to check the component (31) for cracks using an optical measurement method using white light interferometry, wherein the device is set up to individually regulate the current in each individual pixel while checking for cracks, wherein a robot unit is provided which is set up to carry out repair welding using a laser powder build-up welding method, wherein a database which is linked to a data processing unit (1) contains predefined cases of damage and shapes which can be compared with the damage which is currently present in each case.

13. Device according to claim 12, **characterised in that** the device comprises an automated storage rack (21), one or more rotary tables and one or more robot units (52, 62, 72, 82).

## Revendications

1. Procédé de réparation d'une partie structurale d'avion et/ou de turbine à gaz (31), le procédé comprenant les étapes automatisées suivantes :
a) contrôle des fissures de la partie structurale (31) à l'aide d'une procédure de mesure optique utilisant l'interférométrie en lumière blanche, dans lequel les données de géométrie et/ou de dommages déterminées sont enregistrées de manière spécifique à la partie structurale,
b) génération d'une stratégie d'usinage adaptative en utilisant les données de géométrie et de dommages obtenues dans une unité de traitement de données (1),
c) usinage par enlèvement de copeaux de la partie structurale (31),
d) détermination des données de géométries modifiées de la partie structurale (31),
e) réalisation d'une soudure de réparation, dans lequel la soudure de réparation est réalisée par une unité robotisée avec une procédure de soudure au laser avec apport de poudre,
f) contrôle des fissures de la partie structurale (31) à l'aide d'une procédure de mesure optique,
dans lequel une base de données reliée à l'unité de traitement de données (1) dispose d'exemples de dommages et de formes de façonnage prédéfini(e)s qui sont comparé(e)s, à l'étape de procédé b), aux dommages respectivement présents actuellement,
dans lequel, pendant le contrôle des fissures, une régulation de courant individuelle est effectuée dans chaque pixel individuel.

2. Procédé de réparation selon la revendication 1, **caractérisé en ce que**, à l'étape b), l'unité de traitement de données (1) permet de générer automatiquement des bandes de fraisage et/ou une stratégie de fraisage.

3. Procédé de réparation selon une des revendications précédentes, **caractérisé en ce que** la partie structurale (31) est orientée automatiquement avant l'étape a) et/ou f).

4. Procédé de réparation selon une des revendications précédentes, **caractérisé en ce que**, pour déterminer les données de géométrie et/ou de dommages dans le cadre du contrôle des fissures, les images individuelles enregistrées sont composées en une image globale de la partie structurale (31) par des processus de transformation et d'enregistrement.

5. Procédé de réparation selon la revendication 4, **caractérisé en ce que**, pour exploiter le nuage de points complet de la partie structurale (31), une décomposition en zones partielles est effectuée et permet de rechercher des dommages individuels, et dans lequel des caractéristiques de conception et des détériorations sont déterminées et différenciées à l'aide de paramètres de modèles.

6. Procédé de réparation selon la revendication 4 et 5, **caractérisé en ce que** les dommages détectés dans des zones partielles et qui arrivent jusqu'à la limite de la zone sont marqués et sont pris en compte pour analyser la zone adjacente.

7. Procédé de réparation selon une des revendications précédentes, **caractérisé en ce qu'**une unité de traitement de données (1) définit automatiquement une stratégie de réparation en utilisant les données de géométrie et/ou de dommages déterminées à l'étape a) ainsi que des paramètres de technologie prédéfinis et crée un programme de réparation global de la partie structurale (31).

8. Procédé de réparation selon une des revendications précédentes, **caractérisé en ce que** la soudure de réparation automatisée en se basant sur les données de géométrie modifiées de la partie structurale (31) est défini automatiquement par l'unité de traitement de données (1).

9. Procédé de réparation selon une des revendications précédentes, **caractérisé en ce que** les données de géométrie modifiées sont déterminées par le biais d'un balayage automatique de la partie structurale (31).

10. Procédé de réparation selon une des revendications précédentes, **caractérisé en ce que** les étapes de procédé a) à f) sont réalisées plusieurs fois les unes derrière les autres sur la même partie structurale (31).

11. Procédé de réparation selon une des revendications précédentes, **caractérisé en ce que** la partie structurale (31) est une partie structurale de turbine à gaz en superalliage.

12. Dispositif de réparation d'une partie structurale d'avion et/ou de turbine à gaz (31), dans lequel le dispositif présente au moins une table tournante pour recevoir la partie structurale (31) et/ou un porte-outil (32) et est installé pour mettre en oeuvre le procédé selon une des revendications 1 à 11, dans lequel le dispositif est installé pour contrôler les fissures de la partie structurale (31) à l'aide d'une procédure de mesure optique utilisant l'interférométrie en lumière blanche, dans lequel le dispositif est installé pendant le contrôle des fissures pour réguler le courant individuellement dans chaque pixel individuel, dans lequel une unité robotisée est prévue et installée pour réaliser une soudure de réparation avec une procédure de soudure au laser avec apport de poudre, dans lequel une base de données reliée à une unité de traitement de données (1) dispose d'exemples de dommages et de formes de façonnage prédéfini(e)s qui peuvent être comparé(e)s aux dommages respectivement présents actuellement.

13. Dispositif selon la revendication 12, **caractérisé en ce que** le dispositif comprend un entreposage à très grande hauteur (21) automatisé, une ou plusieurs tables tournantes et une ou plusieurs unités robotisées (52, 62, 72, 82).
